# EUROPEAN PATENT APPLICATION

(11) **EP 2 905 569 A1**
(43) Date of publication of application: **12.08.2015**
(21) Application number: 13843325.5
(22) Date of filing: 03.10.2013
(51) Int. Cl.: F28D 20/02, F28D 15/02, F28D 17/02, F28D 17/04

(54) **HEAT STORAGE SYSTEM AND METHOD FOR THE CHARGING AND DISCHARGING THEREOF**

(30) Priority: 04.10.2012 ES 201200973
(71) Applicant: Abengoa Solar New Technologies, S.A., 41014 Sevilla (ES)
(72) Inventor: JOVE LLOVERA, Aleix, E-41014 Sevilla (ES); PRIETO RÍOS, Cristina, E-41014 Sevilla (ES)
(74) Representative: Garcia-Cabrerizo y del Santo, Pedro Maria
(86) International application number: PCT/ES2013/000218
(87) International publication number: WO 2014/053677

(57) **Abstract**

Thermal storage system and its charging and discharging process using a heat-transfer fluid. The system includes a phase change storage material contained in a casing that is penetrated by heat exchanger tubes (3), preferably vertical ones, connected at their lower end with at least one lower chamber (62) via lower sub-chambers (62') which include a series of injectors (9) for enabling the heat-transfer fluid to be inserted in gas form; at the upper end, these tubes (3) connect via upper sub-chambers (61') with at least one upper chamber (61) which in turn is connected to a boiler (1) from which downpipes (8) extend via which heat-transfer fluid in liquid form circulates, located outside of the casing, connecting the aforementioned boiler (1) to the lower chamber (62), which enables the natural circulation of the heat-transfer fluid within the system.

## Description

### Technical field of the invention

This invention relates to the field of thermal storage using phase change material (PCM). In particular, it refers to a thermal energy storage system suitable for being charged and discharged with a heat-transfer fluid in a thermal exchange process (evaporation/condensation) and which stores heat in the form of latent heat of fusion of a phase change material.

The thermal storage system proposed can be used in solar thermal plants for steam generation and in production processes in which the storage of heat may be an interesting differentiating factor from an economic point of view.

### Background of the invention

Phase change materials can be an interesting, efficient and high energy density alternative for storing heat and particularly for applications at constant temperature. There are countless phase change materials and exchange system related thereto, which are aimed at, among others:
- Improving the thermal conductivity of the phase change material given that the phase change materials most commonly used have a low thermal conductivity (approximately 0.5W/mK).
- Obtaining the maximum energy density possible.
- Managing the volume expansion of the phase change material. The materials normally used expand on melting and contract during crystallisation/solidification.
- Optimising the thermal transfer or exchange between the storage material and the transfer method...

At the moment, the exchange systems based on phase change materials for generating saturated steam or for evaporating/condensing heat-transfer fluids, are designed to always be charged from the upper part of the system. In other words, the heat-transfer fluid passing through the phase change material chamber is always carried out from the upper part of the machine and it circulates to the lower part. The main reason for this is that it enables the correct management of the volume expansion of the phase change material, leaving free space in the upper part of the machine for the expansion of this phase change material.

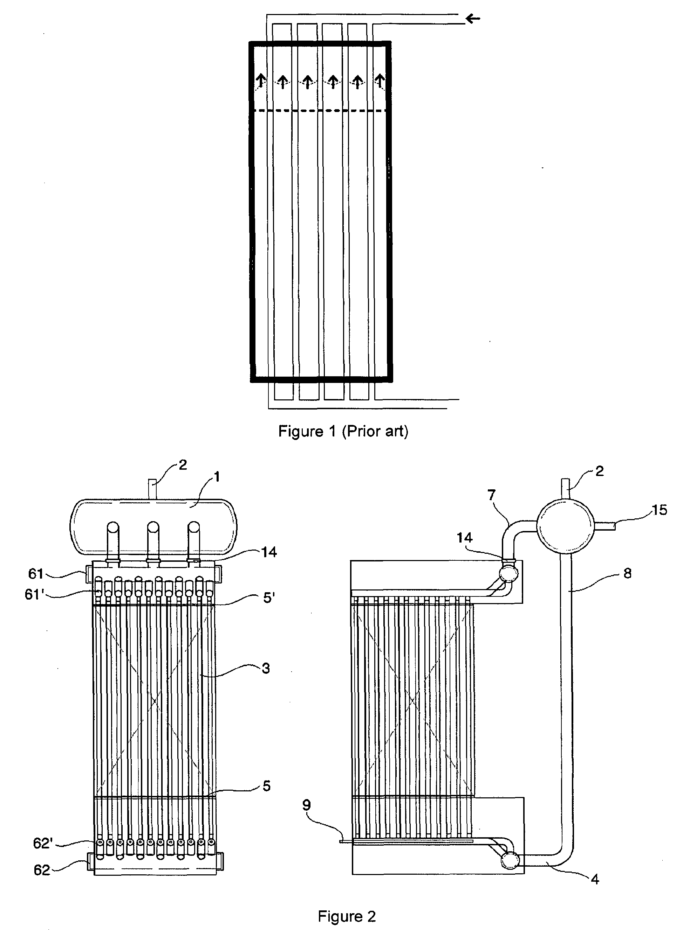

As shown in the heat exchanger system in Figure 1 of the prior art, at the beginning of the charging process, the phase change material is solidified, occupying an area in the tank up to the level indicated by a thick dashed line. When the charging begins from the upper part (the steam or heat-transfer fluid enters from the upper part), the phase change material begins to melt and expand, occupying the free space situated above the dashed line. If the system were to be charged from the lower part with the solutions that are currently available in the prior art, excess pressure would be generated in the exchange phase which could damage the chamber, as the lower part does not have any room for expansion. Therefore, the solutions proposed up until now require charging to always be carried out in a descending vertical direction.

As a result of this, at the time of charging, the steam or heat-transfer fluid must always enter from the upper part, condensing along the tubes and exiting as condensed steam through the lower part, without the possibility of natural recirculation, thus limiting the speed/flow of the fluid within the tubes to a level that enables the condensation and also the thermal transfer speed of the steam or heat-transfer fluid to the phase change material. Furthermore, in order to obtain a totally condensed liquid at the exit, a condensing tank would be needed at the lower part of the system.

There are a number of different patents in the prior art that refer to heat exchange systems between a thermal storage phase change material and a heat transfer fluid.

Patent US20070175609 describes a thermal exchange system between a phase change material and a fluid thanks to the use of graphite sheets within the phase change material with the aim of increasing heat conductivity. The invention however, does not provide details about how the charging and discharging operations are carried out.

Patent US4993481A describes a thermal energy storage system using a porous ceramic moulding containing a phase change material and in turn crossed by a series of channels where the heat-transfer fluid circulates. In this case the invention is designed for heat-transfer or work fluids such as gases or liquids without phase change (without evaporation/condensation) therefore it does not allow for a natural recirculation given the density difference of the fluid.

Patent US005220954 describes a heat exchanger/accumulator based on phase change materials with the particular feature that its cylindrical design allows the thermal expansion of the phase change material during charging. The system does not offer any thermal conductivity improvements for the phase change material or any transfer speed improvements on the work fluid side.

Patent CN201093907Y offers a heat exchanger system between a phase change material and a heat-transfer fluid, characterised in that it is made up of a series of finned tubes arranged in parallel and a system that allows this fluid to circulate in the desired direction, whether charging or discharging the system; however, with this system, as the load is in a vertical ascending direction, the same problem would occur in relation to the expansion of the phase change material mentioned above and therefore this patent would not solve this dilemma.

The document "Development of High Temperature Phase-Change-Material Storages" - Doerte Laing, Thomas Bauer, Nils Breidenbach, Bernd Hachmann, Maike Johnson-Institute of Technical Thermodynamics, German Aerospace Center (DLR)- describes a thermal energy storage system using a phase change material and a heat exchanger system based on vertical finned tubes capable of exchanging heat with saturated steam. This document also describes the way of charging the system with a single step process but always in a descending direction (starting charging at the upper part and ending at the lower part), which means that if we want to obtain saturated water at the exit of the system, we would need a condensate tank at the lower end to enable saturated water to be obtained with the aim of being pumped back to the rest of the cycle. The system can only be charged in this way (downwards) given the aforementioned volumetric expansion problem with the phase change material, thus allowing the material to expand without creating over-pressurisation areas.

Patent WO2010146197 refers to a composite phase change material made up of a carbon or graphite foam and hydroxide salt. The material as a whole may increase the thermal conductivity of the salt thanks to the carbon and graphite conductive matrix and also enable the local management of the volume expansion of the salt.

In view of what is available in the prior art, this invention aims to improve the following aspects:
- Use a phase change material that enables the use of a system that can be charged and discharged from the bottom thereof (in vertical ascending direction), thus allowing the natural recirculation of the heat-transfer fluid in the condensation/evaporation process and achieving a better thermal transfer between this work fluid and the phase change material. This will also enable the flow that passes through the thermal exchange tubes to be increased, which means the fluid circulation speed increases and, in turn, the Reynolds numbers increase and also the effectiveness of the thermal exchange between the heat-transfer fluid and the phase change material. It also means the recirculation pump does not have to be used or the condensate tank at the lower end of the machine, which is currently required during the charging processes of the systems that exist in the prior art.
- To obtain a phase change material that is capable of managing its own volume expansion or if not, using a phase change material exchanger configuration that enables the local management of the volume expansion of the phase change material.
- To obtain a system capable of being discharged in three different ways: I) with a single passage of steam (the steam circulates through the exchanger tubes once only), ii) with forced recirculation thanks to a recirculation pump and iii) with natural recirculation (thanks to the different steam densities in circulation). Both the discharging and charging of the system with a single passage (the fluid only passes through the exchange tubes once) are significantly less effective than discharging and charging via natural recirculation and which takes place from the lower part of the system (a process in which there is an internal recirculation of the heat-transfer fluid with the aim of increasing the flow that goes through the exchange tubes).

### Invention description

The invention consists of a thermal storage system and the process for carrying out the exchange of heat between the storage material contained in said system and the heat-transfer fluid (system charging/discharging process).

The storage system consists of a heat exchanger via which the heat-transfer fluid circulates and a storage material, with this material being a phase change material that has a minimum thermal expansion of less than 5% and is capable of managing its own volume expansion by itself.

During the system charging process, it is the heat-transfer fluid in gas form that provides the storage material with heat, which melts at the same time as the heat-transfer fluid condenses. During the discharging process it is the storage material that provides the heat-transfer fluid with heat which turns from liquid form to gas form while the storage material solidifies.

The phase change storage material consists of a rigid matrix that includes a phase change material and is contained in a casing or external tank.

The heat exchanger comprises a set of vertical straight tubes that penetrate the storage material via which the thermal exchange takes place between the heat-transfer fluid that circulates through them and the storage material. These tubes are separated from one another, allowing the fusion or crystallisation of all the storage material that exists between them.

At the lower end, the vertical tubes connect with at least one lower chamber via lower sub-chambers. The lower sub-chambers include a series of injectors that enable the heat-transfer fluid to be inserted in gas form into the lower part of the heat exchanger when charging the system.

At the upper end, the preferably vertical tubes connect with at least one upper chamber by means of upper sub-chambers. The upper chamber is, in turn, connected to a boiler located outside of the casing and at a level that is higher than the upper chamber. One or more recirculation downpipes extend from the boiler, which are also located outside of the casing and which connect the aforementioned boiler with the lower chamber. Heat-transfer fluid in liquid form circulates through these downpipes from the boiler and enters the vertical tubes that penetrate through the storage material through the lower chamber and sub-chambers.

The boiler also has an exit for heat-transfer fluid in gas form and an entry or exit point for heat-transfer fluid in liquid form whether this if for discharging or charging respectively.

For charging the system, the heat-transfer fluid in liquid form that descends the downpipes mixes with the heat-transfer fluid in gas form that is injected into the system through the lower sub-chambers. This fluid in gas form inserted through the lower part of the system and mixed with the fluid in liquid form that comes from the downpipes, enables, through the density differences with the fluid in liquid phase contained in the downpipes, a natural recirculation of fluid, taking advantage of this fact to increase the through-flow along the vertical tubes of the heat exchanger and thus increase the thermal transfer of the heat-transfer fluid. The water level remains constant in the boiler thanks to the extraction of heat-transfer fluid in liquid form.

The heat-transfer fluid in liquid form and in gas form is mixed in order to enable the transfer of heat by the fluid to the storage material, given that thermal transfer is always more effective by mixing liquid-gas than just gas.

In solar thermal plants, system charging is carried out during the day, that is, while steam is being generated in the plant through solar radiation. Discharging would take place at night when there is no solar radiation, thus using the heat stored in the storage phase change material to produce steam.

Below is a description of the process for charging the thermal storage system described above, comprising a phase change material
1) Insertion of the heat-transfer fluid in gas phase into the system's lower sub-chambers through the injectors, where it mixes the recirculated heat-transfer fluid in liquid form from the boiler and which descends via the downpipes, passing through the lower chamber or chambers.
2) Ascending circulation of the mixture of fluid in liquid form and gas form by natural circulation via the vertical heat exchanger tubes thanks to the density difference between the fluid in liquid form and gas form and the liquid fluid contained in the downpipes.
3) Transfer of heat from the heat-transfer fluid in gas form contained in the mixture that ascends via the vertical thermal exchange tubes to the phase change material housed in the casing, thus generating the condensation of said fluid.
4) Energy gained from the heat-transfer fluid in gas form by the heat-transfer fluid, which melts.
5) Circulation of condensed fluid collected in the upper sub-chambers and chambers up to the boiler.
6) Extraction of heat-transfer fluid in liquid form from the boiler, maintaining the constant charging conditions and a constant level in the boiler.

Thanks to the aforementioned storage system and the charging method thereof via the lower part, the natural recirculation of the heat-transfer fluid is possible because of the density difference between the heat-transfer fluid in evaporation/condensation in the thermal exchange vertical tubes and the heat-transfer fluid in liquid form in the downpipes. As mentioned above, this natural recirculation means the pass-through increases in the recirculation circuit and therefore the thermal transfer increases (increased Reynolds numbers and thermal transfer coefficient).

Also, thanks to this natural recirculation, the system does not need a recirculation pump.

Below is a description of the thermal storage system discharging process (normally discharged during periods without sunlight, either at night or in transitory periods):
1) Boiler supply with heat-transfer fluid in liquid form to maintain constant discharging conditions.
2) The heat-transfer fluid in liquid form which is in the boiler at a low temperature (lower than the melting temperature of the phase change material), descends down the downpipes by gravity, passing through the lower chambers and sub-chambers until it enters through the lower part of the thermal exchange vertical tubes.
3) Once the heat-transfer fluid is in the thermal vertical exchange tubes, the heat-transfer fluid absorbs the latent heat of crystallisation of the phase change material thanks to the thermal exchange via the vertical tubes, with the phase change of said fluid beginning and changing to gas phase at the same time as the storage material begins to crystallise.
4) As the heat-transfer fluid starts to change to gas phase it circulates up the vertical tubes thanks to the different pressures with the fluid in liquid phase which circulates along the downpipes, which favours natural circulation.
5) The heat-transfer fluid in gas form which is collected by the upper part of the vertical tubes travels along the upper sub-chambers and along the upper chamber, to the boiler, from where it is extracted via a steam extraction pipe.

Therefore, this invention's system enables charging and discharging operations to be performed via the lower part thereof, which enables the natural recirculation of heat-transfer fluid in both cases, thus increasing the transfer of heat between the heat-transfer fluid and the phase change material. This feature means a recirculation pump is not required (required for forced recirculation) and neither is the condensate tank, which would be necessary in the lower part of the machine in order to obtain saturated water in charging systems in the prior art. This invention uses the boiler located in the upper part of the system instead of the condensate tank.

### Description of the figures

Figure 1: Heat exchanger of the prior art
Figure 2: Complete outline of this invention's thermal storage system using phase change materials (PCM) (front and side view).
Figure 3. Outline of the PCM composite storage material made up of salts and a carbon, graphite or metal matrix.
Figure 1. Outline of 4 blocks (plan view) that contain the PCM composite storage material, showing the holes or orifices for enabling the vertical heat exchanger tubes to pass through.

The references that appear in the figures are as follows:
(1) Boiler
(2) Steam extraction pipe
(3) Heat exchanger tubes
(4) Connection line between downpipe (8) and lower chamber (62)
(5) Lower horizontal tubular plate
(5') Upper horizontal tubular plate
(61) Upper chamber
(62) Lower chamber
(61') Upper sub-chambers (connection between vertical tubes and upper chambers)
(62') Lower sub-chambers (connection between vertical tubes and lower chambers)
(7) Connection pipe between the upper chamber (61) and the boiler (1)
(8) Downpipe
(9) Steam injectors
(10) Graphite, carbon or metal foam
(11) Phase change salts
(12) Phase change storage material rectangular matrix made up of graphite, carbon or metal foam infiltrated with phase change salts
(13) Orifice for tubes to pass through
(14) Thermal expansion joint or expansion compensator
(15) Entry or exit pipe for heat-transfer fluid in liquid form

### Description of the preferred embodiment

In order to provide a better understanding of the invention, below is a description, with the help of diagrams, of the preferred embodiment of this invention.

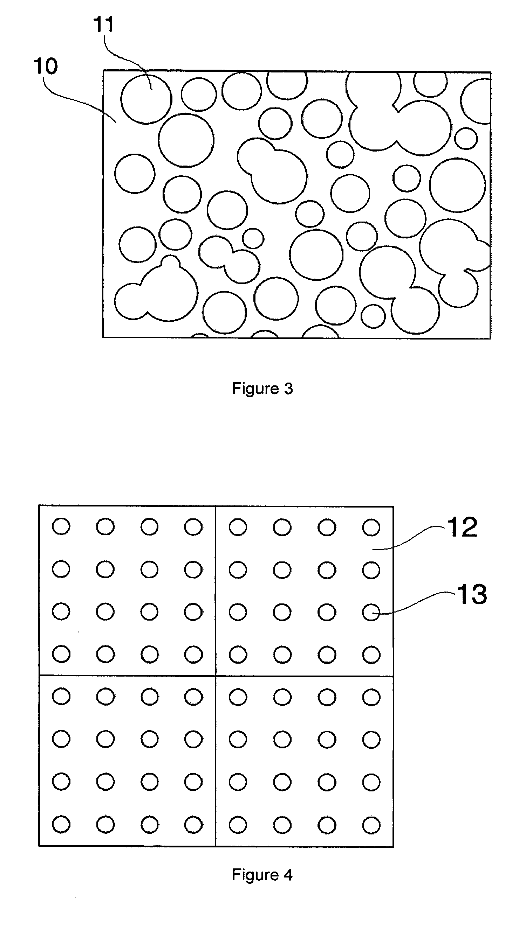

The thermal storage system of this invention comprises a composite storage material made up of a matrix (12) made of a rigid, graphite, carbon or metal foam (10) with high porosity and thermal conductivity, with said matrix being infiltrated with highly thermally energetic salts based on hydroxides (11) (see figures 3 and 4). This storage material is located inside a casing or container tank.

As shown in figure 2, the storage system also has a heat exchanger made up of heat exchanger tubes (3), preferably vertical, through which the heat-transfer fluid circulates and which pass through the storage material through tube pass-through orifices (13, figure 4) so there is direct contact between this storage material and the vertical tubes (3).

The salt (11) infiltrated in the matrix (12) of the storage material melts when it receives heat and crystallises when the heat is extracted, coinciding with the condensation or evaporation of the heat-transfer fluid which passes through the heat exchanger tubes (3), a high thermal transfer is also obtained between the fluid and the phase change storage material thanks to the increased thermal conductivity provided by the carbon, graphite or metal foam (10) that this material is made up of.

Thanks to the use of this carbon, graphite or metal matrix (12), the storage material itself manages the volumetric expansion given that the phase change material (for example salt) expands and contracts in its fusion/crystallisation locally within the same empty spaces of the matrix (12) without filtering through, which enables the system charging process to be carried out through the lower part thereof and in an ascending vertical direction.

This compound storage material is housed in the system's casing in the form of squares that are preferably square, which enables the assembly, as the infiltrated blocks can be alternated with a non-infiltrated phase change material. A series of orifices (13) will be drilled into the blocks to enable the exchanger's vertical tubes (3) to pass through. These orifices (13) are preferably round for the preferably cylindrical tubes to pass through, given that they support high pressures and provide better thermal transfer than square channels and they are also easier to manufacture and purchase.

The heat exchanger tubes (3) (that produce the condensation or evaporation of the heat-transfer fluid) pass through two flat tubular plates (5' and 5) located on the upper and lower part of the exchanger and protrude through the lower plate (5) of the storage material's container or casing. These tubes are welded and attached to the lower tubular plate (5), forming a watertight vessel to prevent storage material leakages, however they are not welded to the upper tubular plate (5') thus enabling the thermal expansion thereof.

At the upper part, the heat exchanger tubes (3) are joined to a series of upper sub-chambers (61') and these to an upper chamber (61), with the latter remaining free for vertical movement and thus being able to absorb the vertical expansion of the tubes thanks to the expansion joints (14), or via an expansion management bend or expansion compensators. The entire upper tubular plate (5'), upper sub-chambers (61') and upper chamber (61) and joints or thermal expansion bends, remain in the storage material's chamber or casing.

The upper chamber (61) ends up, either separately or via the shared connection pipe (7), in a boiler (1) located at the upper part of the chambers (61) and from where the heat-transfer fluid extraction pipe (2) comes out, preferably steam or dry saturated steam. The piping for inserting or extracting the heat-transfer fluid in liquid form (15) comes out of this same boiler (1).

At the lower part, the heat exchanger tubes (3) are joined to a series of lower sub-chambers (62') and these to a lower chamber (62) which, via one or more connection lines (4), connect with recirculation downpipes (8) (outside of the casing that contains the storage material) which enables the recirculation of the non-evaporated heat-transfer fluid, preferably water. These downpipes (8) come from the boiler (1).

The lower sub-chambers (62') include a series of steam injectors (9) to enable heat-transfer fluid to be inserted, preferably steam or saturated steam into the upper part of the heat exchanger tubes (3) in the case of charging. This steam inserted through the lower part of the system enables a natural recirculation of fluid to be created, through the density difference with the water contained in the downpipes (8), taking advantage of this circumstance to increase the through-flow and thus increase the thermal transfer on the steam side.

Optionally a recirculation pump system can be included on the line (4), to enable the discharge with forced recirculation and also the installation of a valve in the same place to enable the discharge in a single step.

Optionally, the system may include one or more valves in the downpipes (8) to enable the system to be charged and discharged without recirculation, only with the pressure of the system's incoming and outgoing steam respectively.

Below is a description of the system's charging process and the process for producing saturated steam (system discharge) by using the thermal storage energy via a phase change material consisting of a carbon, graphite or metal foam with infiltrated salts: System charging process:
1) The saturated steam enters the lower sub-chambers (62') via the system's steam injectors (9) where it mixes with the recirculated water from the boiler (1) via the downpipes (8) and passing through the lower chamber (62).
2) Ascending circulation of the steam and water mixture through natural circulation via the heat exchanger tubes (3) thanks to the density difference with the water contained in the downpipe/s (8).
3) Heat transfer between the saturated steam contained in the mixture, to the composite storage material made up of a carbon, graphite or metal foam (10) infiltrated with salt (11) housed in the casing and penetrated by the heat exchanger tubes (3).
4) Energy gained from the steam produced by the salt (11) contained in the carbon, graphite or metal foam (10) which melts.
5) Extraction of saturated water via the saturated water exit pipe (15) maintaining the constant level of the heat-transfer fluid in the boiler (1).

This natural recirculation means the through-flow increases in the recirculation circuit and therefore the thermal transfer increases (increased Reynolds numbers and thermal transfer coefficient). Unlike forced recirculation, the system does not need a recirculation pump.

### System discharge process:

1) Boiler supply with heat-transfer fluid in liquid form via the saturated water entry pipe (15) to maintain constant discharge conditions.
2) Lowering through water gravity (liquid phase) at low temperature (below the melting temperature of the phase change material) from the boiler (1) via the downpipe/s (8), passing through the chamber (62) and lower sub-chambers (62') until it enters via the lower part of the heat exchanger tubes (3) that are in contact with the composite storage material consisting preferably of a carbon, graphite or metal foam (10) infiltrated with salt (11).
3) Once the water is in the heat exchanger tubes (3) that are in contact with the storage material, the absorption by the water of the latent heat of crystallisation of the phase change material takes place thanks to the thermal exchange via the heat exchanger tubes (3), thus starting the phase change from water to steam at the same time as the storage material begins to solidify.
4) As the water changes to gas phase (steam) it circulates up the heat exchanger tubes (3) thanks to the pressure difference with the water that circulates along the downpipes (8), which favours the natural circulation.
5) The water steam generated is collected by the upper part of the heat exchanger tubes (3) and directed to the boiler (1) where it is extracted via a steam extraction pipe. The water that has not evaporated collects in the boiler waiting to once again circulate along the downpipes (8).

## Claims

1. Thermal storage system **characterised in that** it comprises:
▪ A phase change storage material with a thermal expansion below 20% and with said material located within a casing,
▪ a heat exchanger via which a heat-transfer fluid circulates and
▪ a boiler (1)
where said exchanger comprises heat exchanger tubes (3) which penetrate the storage material with which they are in continuous contact and with the heat exchanger tubes (3) connected at their lower part with at least one lower chamber (62) via lower sub-chambers (62') which include a series of injectors (9) where the heat-transfer fluid is inserted in gas form to the lower part of the heat exchanger; in the upper part, the heat exchanger tubes (3) connect with at least one upper chamber (61) via upper sub-chambers (61') and where the upper chamber (61) is, in turn, connected to the boiler (1) located outside of the casing and above the aforementioned upper chamber (61); extending from the boiler (1) is an extraction pipe for heat-transfer fluid in gas form (2), an entry or exit pipe for heat-transfer fluid in liquid form (15) and one or more recirculation downpipes (8) via which the heat-transfer fluid in liquid form, located outside of the boiler, connects the aforementioned boiler (1) to the lower chamber (62), which enables the natural circulation of the heat-transfer fluid within the system.

2. Thermal storage system pursuant to claim 1 **characterised in that** the phase change storage material is a material made up of a graphite, carbon or metal matrix (10) infiltrated with hydroxide salts (11).

3. Thermal storage system pursuant to claim 1 **characterised in that** it includes a recirculation pump located between the downpipes (8) and the lower chamber (62).

4. Thermal storage system pursuant to claim 1 **characterised in that** it includes at least one valve in the downpipes (8).

5. Thermal storage system pursuant to claim 1 **characterised in that** the heat exchanger tubes (3) are vertical.

6. Thermal storage system pursuant to claim 1 **characterised in that** the heat exchanger tubes (3) penetrate two flat tubular plates, one lower one (5) to which they are attached and welded and another upper one (5') to which they are not welded.

7. Charging process for the thermal storage system described in the preceding claims **characterised in that** it includes the following stages.
- Insertion of the heat-transfer fluid in gas phase into the system's lower sub-chambers (62') through the injectors (9), where it mixes with the recirculated heat-transfer fluid in liquid form from the boiler (1) and which descends via the downpipes (8), passing through the lower chamber or chambers (62).
- ascending circulation of the mixture of fluid in liquid and gas phase by natural circulation via the heat exchanger tubes (3) thanks to the density difference between the fluid in liquid and gas phase and the liquid fluid contained in the downpipes (8).
- transfer of heat from the heat-transfer fluid in gas form contained in the mixture that ascends via the vertical thermal exchanger tubes (3) to the phase change material housed in the casing, thus generating the condensation of said fluid.
- Energy gained from the heat-transfer fluid in gas form by the heat-transfer fluid, which melts.
- Circulation of condensed fluid collected in the upper sub-chambers (61') and in the upper chamber (61) up to the boiler (1).
- Extraction of saturated water via the saturated water exit pipe (15) maintaining the constant level of the heat-transfer fluid in the boiler (1).

8. Discharging process for the thermal storage system described in the preceding claims 1 to 6, **characterised in that** it includes the following stages.
- Boiler supply with heat-transfer fluid in liquid form via the saturated water entry pipe (15) to maintain constant discharging conditions.
- descent through the gravity of the heat-transfer fluid in liquid form which is in the boiler (1) at a temperature below the melting temperature of the change material via the downpipes (8), passing through the lower chamber (62) and lower sub-chambers (62') until it enters via the lower part of the heat exchanger tubes (3),
- heat-transfer fluid absorption of the latent heat of crystallisation of the phase change material thanks to the thermal exchange via the heat exchanger tubes (3) with the phase change of said fluid beginning and changing to gas phase at the same time as the storage material begins to crystallise.
- the heat-transfer fluid, which starts changing to gas phase, circulates up the heat exchanger tubes (3) thanks to the different pressures with the fluid in liquid phase which circulates along the downpipes (8), which favours the natural circulation.
- Circulation of the heat-transfer fluid in gas form which is collected by the upper part of the heat exchanger tubes (3) by the upper sub-chambers (61') and by the upper chamber (61) towards the boiler (1) from where it is extracted via an extraction pipe (2).
